**Europäisches Patentamt**

**European Patent Office**

**Office européen des brevets**

(19)

(11) Publication number: **0 061 002**

**A1**

(12) # EUROPEAN PATENT APPLICATION

(21) Application number: **82101325.7**

(22) Date of filing: **20.02.82**

(51) Int. Cl.³: **G 02 C 1/06**

(30) Priority: **05.03.81 IT 3062881 U**

(43) Date of publication of application:
**29.09.82 Bulletin 82/39**

(84) Designated Contracting States:
**AT DE FR**

(71) Applicant: DESIL S.p.A. Occhialeria
Domegge
I-32040 Vallesella di Cadore Belluno(IT)

(72) Inventor: de Silvestro, Marchetto
Via Crodola, 2
I-32040 Vallesella di Cadore Domegge(IT)

(74) Representative: Modiano, Guido et al,
MODIANO & ASSOCIATI S.A.S. Via Meravigli, 16
I-20123 Milan(IT)

(54) Metal rim particularly useful in eyeglass frames.

(57) The eyeglass rim (2) comprises, on the inside thereof and along the engagement line of the lens (3), a continuous half-closed groove (4) wherein a rib (8) of a plastics material mating gasket (7) is force fitted, this latter being further provided with two wings (9, 10) extending therefrom to a V-like configuration and being arranged to bear on the rim (2) to provide a lens-bearing seat (11).

Fig. 2

EP 0 061 002 A1

This invention relates to a metal rim particularly useful in eyeglass frames.

Metal eyeglass frames conventionally include rims formed with a continuous groove along their inside center region, wherein the edges of the lenses are accommodated during the assembling thereof.

Such a structure is liable to lead to the lenses being splintered where they contact the metal rims under higher load conditions, or in the event of incidental shocks.

A primary object of this invention is to provide an eyeglass rim which can obviate the above problems.

Another object of the invention is to provide an eyeglass rim, wherein the lens no longer contacts the metal directly.

A further object is to provide a rim which can facilitate the insertion of the lens therein.

Yet another object of this invention is to provide an eyeglass rim of moderate cost.

These and other objects, such as will be apparent hereinafter, are achieved by a metal rim particularly for eyeglass frames, characterized in that it comprises, on the inside thereof and along the line or direction of lens engagement, a continuous half-closed groove, into said groove there being force fitted a rib of a plastics material mating gasket, said gasket being further provided with two wings or flanges extending therefrom according to a concave configuration in cross-section and being arranged to bear onto said rim to constitute a lens-bearing seat.

Further features and advantages of the invention will be more apparent from the following detailed description of a preferred embodiment, given herein by way of example and not of limitation, and illustrated in the accompanying drawing, where:

Figure 1 is a general view of eyeglasses having a metal frame; and

Figure 2 is an enlarged scale sectional view taken along the line II-II of Figure 1.

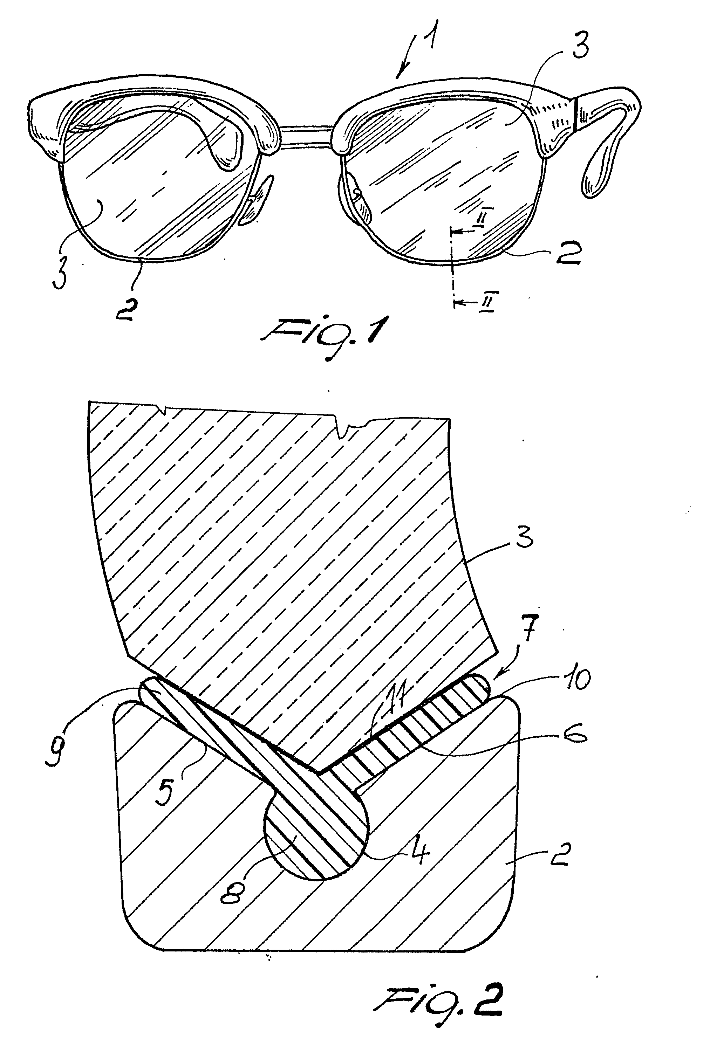

With reference to the drawing figures, an eyeglass frame 1, as indicated, comprises two metal rims 2 which serve the function of holding the lenses 3.

The metal rim 2 is provided on its inside center portion with a half-open continuous groove 4 of slightly greater than semicircular cross-section, on either sides whereof are two V-like shoulders, 5 and 6, extending outwards from the opposite edges of the groove 4.

A plastics gasket 7 has a rib 8 of semicircular cross-section adapted for insertion into the groove 4 to a snug fitting, and two wings or flanges, 9 and 10, which extend V-like from said rib and bear onto the shoulders 5,6 to define a seat 11, wherein the V-shaped edge of the lens 3 can be fitted.

Instead of a V-shape of the lens edge and the seat 11, modified shapes may be adopted, such as to form generally a concavity.

The gasket 7 is formed by extrusion and then cut to length such that it can be inserted into the rim and span it in its entirety.

Instead of semicircular cross-section for the groove 4 and the rib modified cross-section contours may be used, such as an arrow-like one, provided that snug fitting or shape engagement relationship between the rib and the groove is obtained.

The lens is no longer held in contact with the frame metal, thus avoiding all risks of splintering or breakage and solving the problems encountered conventionally with such eyeglass frames.

The dimensions of the gaskets are so minimal as to be unobtrusive and not to affect the eyeglasses appearance.

The gasket is firmly seated in the rim, and cannot be incidentally dislodged in handling the eyeglass frames for storage, nor while being handled for the insertion of the lenses therein.

The gasket is preferably formed from nylon, but other non-rigid plastic materials may be alternatively utilized.

The dimensions may likewise be any selected ones to suit individual requirements.

CLAIMS

1. A metal rim particularly for eyeglass frames, characterized in that it comprises, on the inside thereof and along the line or direction of lens (3) engagement, a continuous half-closed groove (4), into said groove (4) there being force fitted a rib (8) of a plastics material mating gasket (7), said gasket (7) being further provided with two wings or flanges (9, 10) extending therefrom according to a concave configuration in cross-section and being arranged to bear onto said rim (2) to constitute a lens-bearing seat (11).

2. A rim according to Claim 1, characterized in that on either sides of said half-closed groove (4) said rim (2) is formed with two V-shaped shoulders (5, 6).

3. A rim according to one or more of the preceding claims, characterized in that said rib (8) on said gasket (7) is shaped to mate with said groove (4), and in that said wings or flanges (9, 10) of said gasket (7) are arranged to bear on said V-like shoulders (5, 6) of the rim (2).

4. A rim according to one or more of the preceding claims, characterized in that said gasket (7) constitutes the lens-bearing seat (11), thereby the lens (3) is no longer held in contact with the rim metal (2).

5. A rim according to one or more of the preceding claims, characterized in that said gasket (7) is formed from a non-rigid plastics material, preferably nylon.

6. A metal rim particularly for eyeglass frames, substantially as herein described and illustrated.

Fig.1

Fig.2

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 039 085 (E.BECK) *Page 2, lines 6-17; claims 1,2; figure 6* | 1-6 | G 02 C 1/06 |
| A | DE-A-3 038 032 (MURAKAMI) *Page 7, lines 19-31; claims 1,5; figure 10* | 1-6 | |
| A | FR-A-1 551 484 (VEYRAT) *Page 2, column 2, lines 8-19; claims 7-9; figure 9* | 1-6 | |

TECHNICAL FIELDS SEARCHED (Int. Cl. 3)

G 02 C

The present search report has been drawn up for all claims

| Place of search | Date of completion of the search | Examiner |
|---|---|---|
| THE HAGUE | 21-06-1982 | SEIFERT H.U. |